# EUROPEAN PATENT SPECIFICATION

(11) **EP 4 305 122 B1**
(45) Date of publication and mention of the grant of the patent: **07.10.2026**
(21) Application number: 22712738.8
(22) Date of filing: 08.03.2022
(51) Int. Cl.: C09K 5/04

(54) **COMPOSITIONS COMPRISING 2,3,3,3-TETRAFLUOROPROPENE AND OXIDATION PRODUCTS**
ZUSAMMENSETZUNGEN MIT 2,3,3,3-TETRAFLUORPROPEN UND OXIDATIONSPRODUKTEN
COMPOSITIONS COMPRENANT DU 2,3,3,3-TÉTRAFLUOROPROPÈNE ET DES PRODUITS D'OXYDATION

(30) Priority: 08.03.2021 US 202163158103 P
(43) Date of publication of application: 17.01.2024
(60) Divisional application: 25218291.0 / 4 674 922
(73) Proprietor: The Chemours Company FC, LLC, Wilmington, Delaware 19801 (US)
(72) Inventor: PENG, Sheng, Hockessin, Delaware 19707 (US); SUN-BLANKS, Jian, Arab, Alabama 35016 (US)
(74) Representative: Abitz & Partner
(86) International application number: PCT/US2022/019276
(87) International publication number: WO 2022/192205

(56) References cited:
- US-A1- 2006 022 166
- US-A1- 2009 283 712
- US-A1- 2012 187 330
- US-A1- 2020 190 380
- US-A1- 2020 347 283

## Description

### FIELD

The present invention relates to compositions comprising 2,3,3,3-tetrafluoropropene and an inhibitor.

### BACKGROUND

New environmental regulations on refrigerants have forced the refrigeration and air-conditioning industry to look for new refrigerants with low global warming potential (GWP).

Replacement refrigerants are being sought that have low GWP, low toxicity, low or non-flammability, reasonable cost and excellent refrigeration performance. Fluoroolefins provide satisfy these criteria. In addition, desired properties in a refrigerant include ease of detecting leaks, performance including efficiency and capacity refrigerant applications, solubility in lubricants used in such applications and compatibility with components used in such applications.

2,3,3,3-Tetrafluoropropene (HFO-1234yf, R-1234yf, or 1234yf) is an example of a fluoroolefin having a low Global Warming Potential (GWP) and is an alternative to high GWP hydrofluorocarbons and/or ozone-depleting hydrochlorofluorocarbons in numerous applications such as refrigeration, air-conditioning, heating and cooling, power cycles. Improvement in properties of compositions comprising 1234yf is desired.

### Description of Related Art

1234yf is a stable molecule when used in heat transfer applications such as refrigeration and air-conditioning. However, 1234yf may oligomerize or homopolymerize in the presence of radical initiators, such as air, which may be inadvertently introduced.

WO2019/213004 discloses compositions comprising fluoroolefins and certain inhibitors to increase stability thereof during packaging, storage and usage in refrigeration or air-conditioning systems. Terpenes, for example limonene, α-terpinene, and α-pinene, are disclosed as being effective to prevent polymerization reactions as determined by visual inspection of 1234yf samples treated with the recited terpenes. Likewise, US 2009/283712 A1, US 2012/187330 A1, US 2006/022166 A1, US 2020/347283, and US 2020/190380 A1 each disclose compositions comprising a fluoroolefin such as HFO-1234yf and certain inhibitors or stabilizing agents.

### SUMMARY

The present disclosure provides a composition comprising 2,3,3,3-tetrafluoropropene, a terpene inhibitor and one or more oxidation products, wherein the oxidation product is an oxidation product of a terpene inhibitor and is present in an amount of 10 to 2000 ppm, based on the total weight of the composition. The terpene inhibitor is chosen from one or more of α-pinene and β-pinene. When the inhibitor is α-pinene, the oxidation product is α-pinene oxide; and when the inhibitor is β-pinene, the oxidation product is at least one of pinocarveol and myrtenol.

α-pinene oxide is illustrated below.

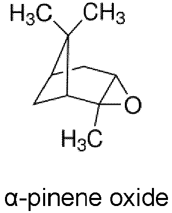

When the inhibitor comprises α-pinene, the composition may further comprise one or more of the following: 5-methyl-4-nonene, α-thujene, tricyclene (1,7,7-trimethyltricyclo[2.2.1.02,6]heptane), α-fenchene, camphene, cymene, d-limonene, α-campholenal.

Pinocarveol and myrtenol are illustrated below.

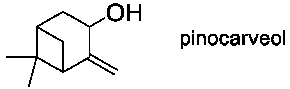

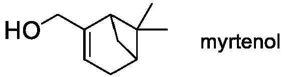

When the inhibitor comprises β-pinene, the composition may further comprise one or more of the following: α-pinene, α-fenchene, camphene, verbenene, myrcene, phellandrene, camphane, cymene and 2-menthene.

The oxidation product may comprise an oxidation product of more than one terpene inhibitor.

The composition may further comprise an additional compound chosen from at least one of HCC-40, CFC-12, HFC-23, HFC-134a, HFC-143a, HFC-152a, , HCFC-225ca, HCFC-225cb, HCFC-244bb, HFC-245cb, HFC-254eb, HFC-263fb, HFO-1123, HFO-1243zf, HFO-1225ye (*E-*and/or *Z*-isomer), HFO-1225zc, HFO-1234ze (*E*- and/or *Z*-isomer), 3,3,3-trifluoro-1-propyne, HCFO-1233xf, HCFO-1122, HCO-1140, HCFO-1131 (*E*- and/or *Z*-isomer), HCFO-1131a, HCFC-124, HCFC-124a, and HCFC-142b.

The composition may further comprise an additional compound chosen from at least one of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, formaldehyde, acetaldehyde, trioxane and trifluoroacetic acid.

The composition may further comprise an additional compound chosen from at least one of Z-HFO-1336mzz, E-HFO-1336mzz, HFO-1327mz, HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye, and HFO-1234yc.

The present disclosure further provides a composition as described in claims 5 to 10, a process as described in claim 11, a method as described in claim 12, and a system as described in claim 13.

The additional compounds are available from commercial suppliers or may be prepared by known methods. The additional compounds may be added in a desired amount. Alternatively, certain of the additional compounds may be co-produced in the methods to produce the composition comprising 2,3,3,3-tetrafluoropropene, and one or more oligomers. If so, the total amount of the one or more additional compound may be desirably controlled by purification methods.

The compositions disclosed herein may be useful as heat transfer compositions, aerosol propellants, foaming agents, blowing agents, solvents, cleaning agents, carrier fluids, displacement drying agents, buffing abrasion agents, polymerization media, expansion agents for polyolefins and polyurethane, gaseous dielectrics, extinguishing agents, and fire suppression agents in liquid or gaseous form.

In particular, the compositions disclosed herein are useful in applications as heat transfer compositions. Such applications include use as a refrigerant composition. A refrigerant composition may further comprise a lubricant such as polyol ester (POE), polyalkylene glycol (PAG), polyvinyl ether (PVE) and synthetic hydrocarbon oils. The compositions disclosed herein may improve performance of heat transfer compositions with lubricant in such applications.

Surprisingly it has been found herein that adding an oxidation product of a terpene stabilizer enhances performance of the resulting composition as a refrigerant or heat transfer composition. The presence of the recited oxidation products improves solubility of 1234yf in the lubricant. In a particular example, p-cymene provides antioxidant properties to the disclosed compositions. Propane is a telogen that can terminate polymer chain propagation.

### DESCRIPTION

### COMPOSITIONS

### Tetrafluoropropene

The tetrafluoropropene component of the composition is 2,3,3,3-tetrafluoropropene (1234yf), which is commercially available, or can be manufactured by various known processes. A suitable source of 1234yf has a purity (concentration of 1234yf relative to other components) of at least 99.95 wt% or at least 99.9 wt% or at least 99.8 wt% or at least 99.5 wt% or at least 99 wt%.

### Inhibitor

The composition disclosed herein comprises a terpene inhibitor chosen from one of more of α-pinene and β-pinene.

Additional inhibitors may be present which may include one or more of α-tocopherol, butylated hydroxytoluene, 4-methoxyphenol, and benzene-1,4-diol. In one embodiment, the inhibitor comprises α-pinene. In one embodiment, the inhibitor comprises β-pinene.

While any suitable amount of terpene inhibitor may be employed, effective amounts of a terpene inhibitor comprise from 0.001 wt% to 10 wt%, 0.01 wt% to 5 wt%, 0.3 wt% to 4 wt%, 0.3 wt% to 1 wt% based on the total weight of the composition. In one embodiment, an effective amount comprises 10 to 2000 ppm or 10 to 1000 ppm or 10 to 500 ppm of at least one terpene inhibitor.

When an additional inhibitor is present, the total amount of inhibitor (including terpene inhibitor and additional inhibitor) may also range from 0.001 wt% to 10 wt%, 0.01 wt% to 5 wt%, 0.3 wt% to 4 wt%, 0.3 wt% to 1 wt% based on the total weight of the composition.

### Oxidation Product

The composition disclosed herein comprises one or more oxidation products of a terpene inhibitor. The oxidation product may be chosen from one or more of α-pinene oxide, pinocarveol and myrtenol.

When the inhibitor is α-pinene, the oxidation product comprises α-pinene oxide, as illustrated above.

When the inhibitor is β-pinene, the oxidation product comprises at least one of pinocarveol and myrtenol, as illustrated above. In one embodiment, when the inhibitor is β-pinene, the oxidation product comprises pinocarveol. In one embodiment, when the inhibitor β-pinene, the oxidation product comprises myrtenol. In one embodiment, when the inhibitor is β-pinene, the oxidation product comprises pinocarveol and myrtenol.

An effective amount comprises 10 to 2000 ppm or 10 to 1000 ppm or 10 to 500 ppm of the at least one oxidation product.

### Additional Compounds

The composition may further comprise one or more additional compounds. The additional compound may provide improvement in refrigerant performance or some other benefit such as improving compatibility with additives, such as lubricants. An improvement in refrigerant performance may include higher capacity or better efficiency.

The additional compound may be chosen from HCC-40, CFC-12, HFC-23, HFC-134a, HFC-143a, HFC-152a, HCFC-225ca, HCFC-225cb, HCFC-244bb, HFC-245cb, HFC-254eb, HFC-263fb, HFO-1123, HFO-1243zf, HFO-1225ye (*E*- and/or *Z*-isomer), HFO-1225zc, HFO-1234ze (*E*- and/or *Z*-isomer), 3,3,3-trifluoro-1-propyne, HCFO-1233xf, HCFO-1122, HCO-1140, HCFO-1131 (*E*- and/or *Z*-isomer), HCFO-1131a, HCFC-124, HCFC-124a, and HCFC-142b. These and other additional compounds are recited in Table 1.

The additional compound may be chosen from at least one of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, formaldehyde, acetaldehyde, trioxane and trifluoroacetic acid. Certain of these compounds are recited in Table 1.

The composition may further comprise an additional compound chosen from at least one of Z-HFO-1336mzz, E-HFO-1336mzz, HFO-1327mz, HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye, and HFO-1234yc. These compounds are recited in Table 1.

**Table 1. Additional Compounds**

| **Compound** | **Chemical formula** | **Chemical name** |
|---|---|---|
| HFC-32 | CH₂F₂ | difluoromethane |
| HC-40 | CH₃Cl | chloromethane |
| CFC-12 | CCl₂F₂ | dichlorodifluoromethane |
| HFC-23 | CHF₃ | trifluoromethane |
| HCFC-124 | CHClFCF₃ | 1-chloro-1,2,2,2-tetrafluoroethane |
| HCFC-124a | CClF₂CHClF₂ | 1-chloro-1,1,2,2-tetrafluoroethane |
| HFC-125 | CF₃CHF₂ | pentafluoroethane |
| HFC-134a | CF₃CH₂F | 1,1,1,2-tetrafluoroethane |
| HCFC-142b | CClF₂CH₂ | 1-chloro-1,1-difluoroethane |
| HFC-143a | CF₃CH₃ | 1,1,1-trifluoroethane |
| HFC-152a | CHF₂CH₃ | 1,1-difluoroethane |
| HCFC-225ca | CF₃CF₂CHCl₂ | 3,3-dichloro-1,1,1,2,2-pentafluoropropane |
| HCFC-225cb | CF₂ClCF₂CHFCl | 1,3-dichloro-1,1,2,2,3-pentafluoropropane |
| HFC-227ea | CF₃CF₂CHF₂ | 1,1,1,2,2,3,3,3-heptafluoropropane |
| HFC-236fa | CF₃CH₂CF₃ | 1,1,1,3,3,3-hexafluoropropane |
| HFC-244bb | CF₃CFClCH₃ | 2-chloro-1,1,1,2-tetrafluoropropane |
| HFC-245cb | CF₃CF₂CH₃ | 1,1,1,2,2-pentafluoropropane |
| HFC-254eb | CF₃CHFCH₃ | 1,1,1,2-tetrafluoropropane |
| HFC-263fb | CF₃CH₂CH₃ | 1,1,1-trifluoropropane |
| CFO-1112 | CCl₂=CF₂ | 1,1-dichloro-2,2-difluoroethylene |
| HCFO-1122 | CF₂=CHCl | 2-chloro-1,1-difluoroethylene |
| HCFO-1122a | CFCl=CFH | 1-chloro-1,2-difluoroethene |
| HFO-1123 | CF₂=CHF | 1,1,2-trifluoroethylene |
| HCFO-1131 | CHCl=CHF | E- and/or Z-1-chloro-2-fluoroethylene |
| HCFO-1131a | CClF=CH₂ | 1-chloro-1-fluoroethylene |
| E-HFO-1132 | E-CHF=CHF | 1,2-difluoroethylene |
| Z-HFO-1132 | Z-CHF=CHF | 1,2-difluoroethylene |
| HFO-1132a | CH₂=CF₂ | vinylidene fluoride |
| HCO-1140 | CH₂=CHCl | vinyl chloride |
| HCFO-1224yd | E- and/or Z-CF₃CF=CHCl | 1-chloro-2, 3,3, 3-tetrafluoropropene |
| HFO-1243zf | CF₃CH=CH₂ | 3,3,3-trifluoropropene |
| H FO-1225ye | E- and/or Z-CF₃CF=CHF | E- or Z-1,2,3,3,3-pentafluoropropene |
| HFO-1225zc | CF₃CH=CF₂ | 1,1,3,3,3-pentafluoropropene |
| HFO-1234ze | E- and/or Z-CF₃CH=CHF | E- or Z-1,3,3,3-tetrafluoropropene |
| | CH≡CCF₃ | 3,3,3-trifluoro-1-propyne |
| HFO-1234zc | CHF₂CH=CF₂ | 1,1,3,3-tetrafluoro-1propene |
| HFO-1234ye | CHF=CFCHF₂ | 1,1,2,3-tetrafluoropropene |
| HFO-1234yc | CH₂FCF=CF₂ | 1,1,2,3-tetrafluoro-1-propene |
| HCFO-1233xf | CF₃CCl=CH₂ | 2-chloro-3,3,3-trifluoropropene |
| HCFO-1233zd | E- and/or Z-CF₃CH=CHCl | E- and/or Z-1-chloro-3,3,3-trifluoropropene |
| HFO-1327mz | CF₃CF=CHCF₃ | 1,1,1,2,4,4,4-heptafluoro-2-butene |
| HFO-1336mzz | E- and/or Z-CF₃CH=CH CF₃ | E- and/or Z-1,1,1,4,4,4-hexafluoro-2-butene |
| HFO-1558mefzy | CHF(CF₃)CH₂CH=CF(CF ₃) | 1,1,1,2,5,6,6,6-octafluoro-2-hexene |
| HFO-1558mezze | CHF(CF₃)CH=CHCHF(C F₃) | 1,1,1,2,5,6,6,6-octafluoro-3-hexene |
| HFO-187-12mefmyfzy | CF(CF₃)=CHCH₂CF(CF₃) CH₂CHF(CF₃) | 1,1,1,5,7,8,8,8-octafluoro-5-trifluoromethyl-2-octene |

It is desired that the additional compound maintains the composition's global warming potential (GWP) less than 1500 or less than 750 or less than 150. The additional compound may lower the GWP of the composition to less than 4, which is the GWP of 1234yf. For example, certain hydrofluoroolefins (HFOs) have a GWP of less than 4, such as HFO-1243zf, which has a GWP of less than 1.

In one embodiment of the present disclosure, the additional compound may be chosen from one or more of HFO-1243zf, HFC-134a, HCFO-1122, HFC-254eb, HCFC-124 and HFC-23. In one embodiment, the additional compound is a combination of HFO-1243zf, HFC-134a and HFC-143a. In one embodiment, the additional compound is a combination of HFO-1243zf, HFC-134a, HFC-143a, HCFO-1122 and HFC-254eb.

In one embodiment of the present disclosure, the additional compound may be chosen from one or more of HFC-152a, HFO-1234ze(E), HCFO-1131a, HCO-1140, CFC-12, HFC-244bb and HCFO-1233xf. In one embodiment, the additional compound is a combination of HFC-152a and HFO-1234ze(E). In one embodiment, the additional compound is a combination of HFC-152a, HFO-1234ze(E), HCFO-1131a, HCO-1140, HFC-244bb and HCFO-1233xf.

In one embodiment of the present disclosure, the additional compound may be chosen from one or more of HFO-1225ye(Z), HC-40, HFO-1123 and HFC-263fb. In one embodiment, the additional compound is chosen from a combination of HFO-1225ye(Z), HFO-1123 and HFC-263fb.

In one embodiment, the additional compound is a minor component of the composition. In such an embodiment, the amount of an additional compound may be greater than 0 wt% and less than 1 wt%. The total amount of additional compounds present may be greater than 0.1 ppm and less than 0.5 wt% of the total weight of the composition. The total amount of additional compounds present may be greater than 1 ppm and less than 0.1 wt% of the total weight of the composition. The total amount of additional compounds present may be greater than 10 ppm or greater than 100 ppm or greater than 1000 ppm. The total amount of additional compounds may be less than 1 wt% or less than 0.5 wt % or less than 0.1 wt%. In one embodiment, the total amount of additional compounds is less than 1 wt%, such that the amount of 1234yf is at least 99%, or the total amount of additional compounds is less than 0.5%, such that the amount of 1234yf is at least 99.5%.

### Anti-oxidant

One embodiment of the invention relates to a composition as disclosed herein further comprising at least one anti-oxidant. While any suitable oxidant can be employed, examples of suitable oxidants comprise at least one member selected from the group consisting of butylated hydroxytoluene, butylated hydroxyanisole, tertiary-butylhydroquinone, gallate, 2-phenyl-2-propanol, 1-(2,4,5-trihydroxyphenyl)-1-butanone, bisphenol methane derivatives, 2,2'-methylene bis (4-methyl-6-t-butyl phenol), among other phenolics, and combinations thereof.

### PREPARATION OF THE COMPOSITION

The present disclosure provides a composition comprising 1234yf, a terpene inhibitor and one or more oxidation products, wherein the oxidation product is an oxidation product of a terpene inhibitor and the terpene inhibitor may be chosen from one or more of α-pinene and β-pinene.

The composition may be prepared by contacting a composition comprising 1234yf and a terpene inhibitor chosen from one or more of α-pinene and β-pinene with a source of oxygen at a contact time and contact temperature. Optionally one or more of the additional compounds may be present during the contacting step. Examples of what may be used as an oxygen source to prepare the composition disclosed herein include oxygen-containing gases such as oxygen (100%) and air. Alternatively, the oxygen source may be a peroxygen compound such as fluoroolefin polyperoxide, peroxides, hydroperoxides, persulfates, percarbonates, perborates and hydropersulfates. An example of a hydroperoxide is cumene hydroperoxide. A readily available oxygen source is air.

In the preparation of the composition, the oxygen source has an oxygen (O₂) concentration of at least 0.01 % oxygen or at least 21 % oxygen or pure (100%) oxygen, by weight. The contact time is at least 3 days or at least 14 days. The contact temperature is in the range of -25 to 150°C. It will be appreciated by those skilled in the art that the oxygen concentration, contact time and contact temperature are interdependent. That is, as one of the oxygen concentration, contact time and/or temperature increases, the others will decrease.

Air is the preferred oxygen source for its availability and cost. The oxygen source may remain present in the composition after the composition has been prepared in an amount from greater than zero wt% up to 3000 ppm.

Similarly, the anti-oxidant may be present in the composition comprising 1234yf and optionally the one or more additional compounds prior to the above-recited contacting step. The anti-oxidant may be added following the above-recited contacting step.

Alternatively, the composition comprising 2,3,3,3-tetrafluoropropene, a terpene inhibitor and one or more oxidation products, wherein the oxidation product is an oxidation product of a terpene inhibitor, and optionally one or more additional refrigerant compounds and optionally an anti-oxidant, may be prepared by combining 1234yf with a terpene inhibitor chosen from one or more of α-pinene and β-pinene and an oxidation product of the chosen terpene inhibitor as described above, and optionally one or more additional compounds and optionally an anti-oxidant, as each of these, that is, 1234yf, terpene inhibitor and oxidation products, additional refrigerant compounds and anti-oxidant are known compounds that can be purchased commercially or prepared according to known methods.

### APPLICATIONS

The compositions disclosed herein have a variety of utilities including working fluids, which include blowing agents, aerosol propellants, sterilants, or heat transfer mediums (such as heat transfer fluids and refrigerants for use in refrigeration systems, refrigerators, air conditioning systems, heat pumps, or chillers). The compositions are particularly suited for use in mobile air conditioning and heating systems and as a component for making a refrigerant blend for use in stationary refrigeration, air-conditioning and heat pump systems.

A blowing agent is a volatile composition that expands a polymer matrix to form a cellular structure.

An aerosol propellant is a volatile composition of one or more components that exerts a pressure greater than one atmosphere to expel a material from a container.

A sterilant is a volatile biocidal fluid or blend containing a volatile biocidal fluid that destroys a biologically active material or the like.

### Heat Transfer Applications

A heat transfer fluid (also referred to herein as a heat transfer composition or heat transfer fluid composition) is a working fluid used to carry heat from a heat source to a heat sink.

The present disclosure further relates to a process for transfer of heat from a heat source to a heat sink wherein the compositions disclosed herein serve as heat transfer fluids. Said process for heat transfer comprises transporting a composition according to the present invention comprising 2,3,3,3-tetrafluoropropene, the terpene inhibitor and the one or more oxidation products from a heat source to a heat sink.

A heat source is defined as any space, location, object or body from which it is desirable to add, transfer, move or remove heat. In one embodiment a heat source is a body to be cooled. In one embodiment, a heat source is a body to be heated.

In some embodiments, the heat transfer composition may remain in a constant state throughout the transfer process (i.e., not evaporate or condense). In other embodiments, evaporative cooling processes may utilize heat transfer compositions as well.

A heat sink may be defined as any space, location, object or body capable of absorbing heat. A vapor compression refrigeration system is one example of such a heat sink.

A body to be cooled may be any space location or object (the space location or object may be open or enclosed), requiring refrigeration or cooling. In stationary applications the body may be the interior of a structure, such as a residential or commercial structure requiring air-conditioning, industrial water chillers, or a storage location such as refrigerator or freezer cases in a supermarket, transport refrigerated containers other storage locations for perishables, such as food or pharmaceuticals. In mobile applications, the body may be incorporated into a transportation unit for the road, rail, sea or air, such as the passenger compartment of an automobile requiring air conditioning.

Certain refrigeration systems operate independently with regards to any moving carrier, these are known as "intermodal" systems. Such intermodal systems include "containers" (combined sea/land transport) as well as "swap bodies" (combined road and rail transport).

A body to be heated may be any space, location or object requiring heat. These may be the interior of structures either residential or commercial structures requiring heating, in a similar manner to the body to be cooled. Additionally, mobile units as described for cooling may be similar to those requiring heating. Certain transport units require heating to prevent the material being transported from solidifying inside the transport container.

A heat transfer system is a system (or apparatus) used to produce a heating or cooling effect in a particular space. A heat transfer system may be a mobile system or a stationary system. According to the disclosure herein, there is provided a heat transfer system comprising a composition according to the present invention comprising 2,3,3,3-tetrafluoropropene, the terpene inhibitor and the one or more oxidation products. In one embodiment, the heat transfer system is a stationary system chosen from a refrigeration, air-conditioning or heat pump apparatus. In one embodiment, the heat transfer system is a mobile system which is a mobile air-conditioning system.

A refrigerant is defined herein as a heat transfer fluid which undergoes a phase change from liquid to gas and back again during a cycle used to transfer of heat. There is provided herein a refrigerant comprising 2,3,3,3-tetrafluoropropene, the terpene inhibitor and the one or more oxidation products as described above. In one embodiment, the refrigerant further comprises a lubricant. In one embodiment, the refrigerant comprises one or more added refrigerants (as defined hereinbelow).

The present disclosure further relates to a method for producing heating comprising evaporating a refrigerant as described above comprising 2,3,3,3-tetrafluoropropene, the terpene inhibitor and the one or more oxidation products, and thereafter condensing said composition in the vicinity of a body to be heated. In one embodiment of this method, the refrigerant further comprises a lubricant.

The present disclosure further provides a method for producing cooling comprising condensing a refrigerant as described above comprising 2,3,3,3-tetrafluoropropene, the terpene inhibitor and the one or more oxidation products, and thereafter evaporating said composition in the vicinity of a body to be cooled. In one embodiment of this method, the refrigerant further comprises a lubricant.

The present disclosure further provides a method for producing heating or cooling in a refrigeration, air-conditioning, or heat pump apparatus, said method comprising introducing a refrigerant into said apparatus having (a) a centrifugal compressor; (b) a multi-stage centrifugal compressor, or (c) a single slab/single pass heat exchanger; wherein said refrigerant or heat transfer fluid composition comprises the composition according to the present invention comprising 2,3,3,3-tetrafluoropropene, the terpene inhibitor and the one or more oxidation products. In one embodiment of this method, the refrigerant further comprises a lubricant.

### Lubricant

The lubricant component of the refrigerant compositions can comprise those suitable for use with refrigeration or air-conditioning apparatus. Among these lubricants are those conventionally used in compression refrigeration apparatus utilizing chlorofluorocarbon refrigerants. Such lubricants and their properties are discussed in the 1990 ASHRAE Handbook, Refrigeration Systems and Applications, chapter 8, titled "Lubricants in Refrigeration Systems", pages 8.1 through 8.21. These include mineral oils and synthetic oils.

Mineral oils comprise paraffins (i.e. straight-chain and branched-carbon-chain, saturated hydrocarbons), naphthenes (i.e. cyclic or ring structure saturated hydrocarbons, which may be paraffins) and aromatics (i.e. unsaturated, cyclic hydrocarbons containing one or more rings characterized by alternating double bonds).

Synthetic oils comprise alkylaryls (i.e. linear and branched alkyl alkylbenzenes), synthetic paraffins and naphthenes, silicones, and poly-alpha-olefins.

The lubricant component may comprise those which have been designed for use with hydrofluorocarbon refrigerants and are miscible with compositions disclosed herein under compression refrigeration and air-conditioning apparatus' operating conditions. Such lubricants and their properties are discussed in "Synthetic Lubricants and High-Performance Fluids", R. L. Shubkin, editor, Marcel Dekker, 1993. Such lubricants include, but are not limited to, polyol esters (POEs) such as Castrol^{®} 100 (Castrol, United Kingdom), polyalkylene glycols (PAGs) such as RL-488A from Dow (Dow Chemical, Midland, Michigan), and polyvinyl ethers (PVEs).

Lubricants for applications disclosed herein are selected by considering a given compressor's requirements and the environment to which the lubricant will be exposed. In one particular embodiment, the foregoing refrigerant compositions are combined with a PAG lubricant for usage in an automotive A/C system having an internal combustion engine. In another particular embodiment, the foregoing refrigerant compositions are combined with a POE lubricant for usage in an automotive A/C system having an electric or hybrid electric drive train.

### Added Refrigerants

In other embodiments, the refrigerant composition as described above further comprises one or more added refrigerants. In one embodiment an added refrigerant comprises a hydrofluorocarbon. Examples of suitable hydrofluorocarbons include difluoromethane (HFC-32), pentafluoroethane (HFC-125), 1,1,1,2-tetrafluoroethane (HFC-134a), 1,1-difluoroethane (HFC-152a), 1,1,1,3,3,3-hexafluoropropane (HFC-236fa) and 1,1,1,2,2,3,3,3-heptafluoropropane (HFC-227ea). The refrigerant composition may further comprise a lubricant.

In one particular embodiment, the added refrigerant comprises HFO-1234ze. In another embodiment, the added refrigerant comprises carbon dioxide.

The amount of added refrigerant can range from 10 to 90 wt%, 25 to 75 wt%, 30 to 60 wt% or 30 to 50 wt%.

### Refrigerant Additives

Additives which can improve the refrigerant and A/C lifetime and compressor durability are desirable. In one aspect of the invention, the inventive refrigerant composition is used to introduce lubricant into the A/C system as well as other additives, such as a) acid scavengers and b) flame suppressants.

### Acid Scavenger

An acid scavenger may comprise a siloxane, an activated aromatic compound, or a combination of both. Serrano et al. (paragraph 38 of US 2011/0272624 A1) disclose that the siloxane may be any molecule having a siloxy functionality. The siloxane may include an alkyl siloxane, an aryl siloxane, or a siloxane containing mixtures of aryl and alkyl substituents. For example, the siloxane may be an alkyl siloxane, including a dialkylsiloxane or a polydialkylsiloxane. Preferred siloxanes include an oxygen atom bonded to two silicon atoms, i.e., a group having the structure: SiOSi. Preferred siloxanes include siloxanes of having one or more of methyl, ethyl, propyl, or butyl groups.

In one aspect of the invention, the siloxane is an alkylsiloxane containing from about 1 to about 12 carbon atoms, such as hexamethyldisiloxane. The siloxane may also be a polymer such as polydialkylsiloxane, where the alkyl group is a methyl, ethyl, propyl, butyl, or any combination thereof. Suitable polydialkylsiloxanes have a molecular weight from about 100 to about 10,000. Highly preferred siloxanes include hexamethyldisiloxane, polydimethylsiloxane, and combinations thereof. The siloxane may consist essentially of polydimethylsiloxane, hexamethyldisiloxane, or a combination thereof.

The activated aromatic compound may be any aromatic molecule activated towards a Friedel-Crafts addition reaction, or mixtures thereof. An aromatic molecule activated towards a Friedel-Crafts addition reaction is defined to be any aromatic molecule capable of an addition reaction with mineral acids. Especially aromatic molecules capable of addition reactions with mineral acids either in the application environment (AC system) or during the ASHRAE 97: 2007 "Sealed Glass Tube Method to Test the Chemical Stability of Materials for Use within Refrigerant Systems" thermal stability test.

The acid scavenger (e.g., the activated aromatic compound, the siloxane, or both) may be present in any concentration that results in a relatively low total acid number, a relatively low total halides concentration, a relatively low total organic acid concentration, or any combination thereof. Preferably the acid scavenger is present at a concentration greater than about 0.0050 wt%, more preferably greater than about 0.05 wt% and even more preferably greater than about 0.1 wt% (e.g. greater than about 0.5 wt%) based on the total weight of the refrigerant composition. The acid scavenger preferably is present in a concentration less than about 3 wt%, more preferably less than about 2.5 wt% and most preferably greater than about 2 wt% (e. g. less than about 1.8 wt%) based on the total Weight of the refrigerant composition.

### Flame Suppressants

Preferred flame suppressants include those described in patent application "Refrigerant compositions containing fluorine substituted olefins CA 2557873 A1" along with fluorinated products such as HFC-125 and/or Krytox^{®} lubricants, described in patent application "Refrigerant compositions comprising fluoroolefins and uses thereof WO2009018117A1."

### Preparation of Refrigerant Composition

The refrigerant compositions of the present invention may be prepared by any convenient method to combine the desired amount of the individual components. A preferred method is to weigh the desired component amounts and thereafter combine the components in an appropriate vessel. Agitation may be used, if desired.

### Selected Embodiments

### EXAMPLES

### Example 1 (for reference)

A sample of 60 g of 2,3,3,3-tetrafluoropropene having purity of 99.5 wt% containing HFO-1243zf, HFO-1234ze(E), and HFC-152a and was added to a 500 mL cylinder containing 200 ppm (terpene inhibitor) and 12,000 ppm air. The cylinder was left at room temperature, which varied from about -5°C to about 35°C for six months. The product in the cylinder was tested and found to be polymer-free, with a composition further comprising limonene and its oxidation products, as determined by gas chromatography (below 200 ppm).

## Claims

1. A composition comprising 2,3,3,3-tetrafluoropropene, a terpene inhibitor and one or more oxidation products, wherein the oxidation product is an oxidation product of a terpene inhibitor and is present in an amount of 10 to 2000 ppm, based on the total weight of the composition, and the terpene inhibitor is chosen from one or more of α-pinene and β-pinene, wherein
when the inhibitor is α-pinene, the oxidation product is α-pinene oxide; and
when the inhibitor is β-pinene, the oxidation product is at least one of pinocarveol and myrtenol.

2. The composition of claim 1, wherein the composition further comprises an additional compound chosen from at least one of HCC-40, CFC-12, HFC-23, HFC-134a, HFC-143a, HFC-152a, HCFC-225ca, HCFC-225cb, HCFC-244bb, HFC-245cb, HFC-254eb, HFC-263fb, HFO-1123, HFO-1243zf, HFO-1225ye (*E*- and/or *Z*-isomer), HFO-1225zc, HFO-1234ze (*E*- and/or *Z*-isomer), 3,3,3-trifluoro-1-propyne, HCFO-1233xf, HCFO-1122, HCO-1140, HCFO-1131 (*E*- and/or *Z*-isomer), HCFO-1131a, HCFC-124, HCFC-124a, and HCFC-142b.

3. The composition of claim 1 or 2, wherein the composition further comprises an additional compound chosen from one or more of HFO-1243zf, HFC-134a, HFC-143a, HCFO-1122, HFC-254eb, HCFC-124 and HFC-23, preferably wherein the additional compound is (i) a combination of HFO-1243zf, HFC-134a and HFC-143a, or (ii) a combination of HFO-1243zf, HFC-134a, HFC-143a, HCFO-1122 and HFC-254eb; and/or
wherein the composition further comprises an additional compound chosen from one or more of HFC-152a, HFO-1234ze(E), HCFO-1131a, HCO-1140, CFC-12, HFC-244bb and HCFO-1233xf; and/or
wherein the composition further comprises an additional compound chosen from one or more of HFO-1225ye(Z), HCC-40, HFO-1123 and HFC-263fb.

4. The composition of any one of claims 1 to 3, wherein the composition further comprises an additional compound chosen from at least one of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, formaldehyde, acetaldehyde, trioxane and trifluoroacetic acid; and/or
wherein the composition further comprises an additional compound chosen from at least one of Z-HFO-1336mzz, E-HFO-1336mzz, HFO-1327mz, HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye, and HFO-1234yc.

5. The composition of any one of claims 1 to 4, wherein the terpene inhibitor is present in the composition in an amount of at least 0.001 % by weight (10 ppm), preferably in an amount of at least 0.01 % by weight (100 ppm).

6. The composition of any one of claims 1 to 5 wherein the total amount of additional compound is greater than 0 wt% and less than 1 wt%, preferably greater than 0.1 ppm and less than 0.5 wt% of the total weight of the composition.

7. The composition of any one of claims 1 to 6 wherein the composition further comprises an additional inhibitor chosen from α-tocopherol, butylated hydroxytoluene, 4-methoxyphenol, and benzene-1,4-diol.

8. The composition of any one of claims 1 to 7 wherein the terpene inhibitor comprises α-pinene.

9. The composition of any one of claims 1 to 7 wherein the terpene inhibitor comprises β-pinene.

10. A refrigerant composition comprising the composition of any one of claims 1 to 9 and a lubricant.

11. A process for heat transfer comprising transporting a composition comprising the composition of any one of claims 1 to 9 from a heat source to a heat sink.

12. A method for producing heating or cooling in a refrigeration, air-conditioning, or heat pump apparatus, said method comprising introducing a refrigerant into said apparatus having (a) a centrifugal compressor; (b) a multi-stage centrifugal compressor, or (c) a single slab/single pass heat exchanger; wherein said refrigerant is the refrigerant composition of claim 10.

13. A heat transfer system comprising the composition of any one of claims 1 to 10.

## Patentansprüche

1. Zusammensetzung, umfassend 2,3,3,3-Tetrafluorpropen, einen Terpeninhibitor und ein oder mehrere Oxidationsprodukte, wobei das Oxidationsprodukt ein Oxidationsprodukt eines Terpeninhibitors ist und in einer Menge von 10 bis 2000 ppm, basierend auf dem Gesamtgewicht der Zusammensetzung, vorhanden ist, und der Terpeninhibitor ausgewählt ist aus einem oder mehreren von *α* Pinen und *β*-Pinen, wobei
wenn der Inhibitor *α*-Pinen ist, das Oxidationsprodukt *α*-Pinenoxid ist; und
wenn der Inhibitor *β*-Pinen ist, das Oxidationsprodukt mindestens eines von Pinocarveol oder Myrtenol ist.

2. Zusammensetzung nach Anspruch 1, wobei die Zusammensetzung weiter eine zusätzliche Verbindung umfasst, ausgewählt aus mindestens einem von HCC-40, CFC-12, HFC-23, HFC-134a, HFC-143a, HFC-152a, HCFC-225ca, HCFC-225cb, HCFC-244bb, HFC-245cb, HFC-254eb, HFC-263fb, HFO-1123, HFO-1243zf, HFO-1225ye (*E*- und/oder *Z*-Isomer), HFO-1225zc, HFO-1234ze (*E*- und/oder*Z-*Isomer), 3,3,3-Trifluor-1-propin, HCFO-1233xf, HCFO-1122, HCO-1140, HCFO-1131 (*E*- und/oder *Z-*Isomer), HCFO-1131a, HCFC-124, HCFC-124a und HCFC-142b.

3. Zusammensetzung nach Anspruch 1 oder 2, wobei die Zusammensetzung weiter eine zusätzliche Verbindung umfasst, ausgewählt aus einem oder mehreren von HFO-1243zf, HFC-134a, HFC-143a, HCFO-1122, HFC-254eb, HCFC-124 und HFC-23, vorzugsweise wobei die zusätzliche Verbindung (i) eine Kombination aus HFO-1243zf, HFC-134a und HFC-143a oder (ii) eine Kombination aus HFO-1243zf, HFC-134a, HFC-143a, HCFO-1122 und HFC-254eb ist; und/oder
wobei die Zusammensetzung weiter eine zusätzliche Verbindung umfasst, ausgewählt ist aus einem oder mehreren von HFC-152a, HFO-1234ze(E), HCFO-1131a, HCO-1140, CFC-12, HFC-244bb und HCFO-1233xf; und/oder
wobei die Zusammensetzung weiter eine zusätzliche Verbindung umfasst, ausgewählt aus einem oder mehreren von HFO-1225ye(Z), HCC-40, HFO-1123 und HFC-263fb.

4. Zusammensetzung nach einem der Ansprüche 1 bis 3, wobei die Zusammensetzung weiter eine zusätzliche Verbindung umfasst, ausgewählt aus mindestens einem von CHF(CF₃)CH₂CH = CF(CF₃), CHF(CF₃)CH = CHCHF(CF₃), CF(CF₃) = CHCH₂CF(CF₃)CH₂CHF(CF₃), CF₃C(= O)CH₃, Formaldehyd, Acetaldehyd, Trioxan und Trifluoressigsäure; und/oder
wobei die Zusammensetzung weiter eine zusätzliche Verbindung umfasst, ausgewählt aus mindestens einem von Z-HFO-1336mzz, E-HFO-1336mzz, HFO-1327mz , HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye und HFO-1234yc.

5. Zusammensetzung nach einem der Ansprüche 1 bis 4, wobei der Terpeninhibitor in der Zusammensetzung in einer Menge von mindestens 0,001 Gew.-% (10 ppm), vorzugsweise in einer Menge von mindestens 0,01 Gew.-% (100 ppm), vorhanden ist.

6. Zusammensetzung nach einem der Ansprüche 1 bis 5, wobei die Gesamtmenge der zusätzlichen Verbindung größer als 0 Gew.-% und weniger als 1 Gew.-%, vorzugsweise größer als 0,1 ppm und weniger als 0,5 Gew.-% des Gesamtgewichts der Zusammensetzung beträgt.

7. Zusammensetzung nach einem der Ansprüche 1 bis 6, wobei die Zusammensetzung weiter einen zusätzlichen Inhibitor umfasst, ausgewählt aus α-Tocopherol, butyliertem Hydroxytoluol, 4-Methoxyphenol und Benzol-1,4-diol.

8. Zusammensetzung nach einem der Ansprüche 1 bis 7, wobei der Terpeninhibitor α-Pinen umfasst.

9. Zusammensetzung nach einem der Ansprüche 1 bis 7, wobei der Terpeninhibitor β-Pinen umfasst.

10. Kältemittelzusammensetzung, umfassend die Zusammensetzung nach einem der Ansprüche 1 bis 9 und ein Schmiermittel.

11. Verfahren zur Wärmeübertragung, umfassend Transportieren einer Zusammensetzung, die die Zusammensetzung nach einem der Ansprüche 1 bis 9 umfasst, von einer Wärmequelle zu einer Wärmesenke.

12. Verfahren zum Erzeugen von Erwärmung oder Kühlung in einer Kälte-, Klimatisierungs- oder Wärmepumpeneinrichtung, wobei das Verfahren Einleiten eines Kältemittels in die Einrichtung umfasst, die (a) einen Zentrifugalkompressor, (b) einen mehrstufigen Zentrifugalkompressor oder (c) einen Einplatten-/Einpass-Wärmetauscher aufweist; wobei es sich bei dem Kältemittel um die Kältemittelzusammensetzung nach Anspruch 10 handelt.

13. Wärmeübertragungssystem, umfassend die Zusammensetzung nach einem der Ansprüche 1 bis 10.

## Revendications

1. Composition comprenant du 2,3,3,3-tétrafluoropropène, un inhibiteur de terpène et un ou plusieurs produits d'oxydation, dans lequel le produit d'oxydation est un produit d'oxydation d'un inhibiteur de terpène et présent en une quantité de 10 à 2 000 ppm, sur la base du poids total de la composition, et l'inhibiteur de terpène est choisi à partir d'une ou de plusieurs parmi *α*-pinène et *β-*pinène, dans laquelle
lorsque l'inhibiteur est *α*-pinène, le produit d'oxydation est de l'oxyde de α-pinène ; et
lorsque l'inhibiteur est *β*-pinène, le produit d'oxydation est au moins un parmi pinocarvéol et myrténol.

2. Composition selon la revendication 1, dans laquelle la composition comprend en outre un composé supplémentaire choisi à partir d'au moins un parmi HCC-40, CFC-12, HFC-23, HFC-134a, HFC-143a, HFC-152a, HCFC-225ca, HCFC-225cb, HCFC-244bb, HFC-245cb, HFC-254eb, HFC-263fb, HFO-1123, HFO-1243zf, HFO-1225ye (*E*- et/ou *Z*-isomère), HFO-1225zc, HFO-1234ze (*E*- et/ou *Z-*isomère), 3,3,3-trifluoro-1-propyne, HCFO-1233xf, HCFO-1122, HCO-1140, HCFO-1131 (*E*- et/ou *Z-*isomère), HCFO-1131a, HCFC-124, HCFC-124a et HCFC-142b.

3. Composition selon la revendication 1 ou 2, dans laquelle la composition comprend en outre un composé supplémentaire choisi à partir d'un ou plusieurs parmi HFO-1243zf, HFC-134a, HFC-143a, HCFO-1122, HFC-254eb, HCFC-124 et HFC-23, de préférence dans laquelle le composé supplémentaire est (i) une combinaison de HFO-1243zf, HFC-134a et HFC-143a, ou (ii) une combinaison de HFO-1243zf, HFC-134a, HFC-143a, HCFO-1122 et HFC-254eb; et/ou
dans laquelle la composition comprend en outre un composé supplémentaire choisi à partir d'un ou de plusieurs parmi HFC-152a, HFO-1234ze(E), HCFO-1131a, HCO-1140, CFC-12, HFC-244bb et HCFO-1233xf ; et/ou
dans laquelle la composition comprend en outre un composé supplémentaire choisi à partir d'un ou de plusieurs parmi HFO-1225ye(Z), HCC-40, HFO-1123 et HFC-263fb.

4. Composition selon l'une quelconque des revendications 1 à 3, dans laquelle la composition comprend en outre un composé supplémentaire choisi à partir d'au moins un parmi CHF(CF₃)CH₂CH = CF(CF₃), CHF(CF₃)CH = CHCHF(CF₃), CF(CF₃) = CHCH₂CF(CF₃)CH₂CHF(CF₃), CF₃C(= O)CH₃, formaldéhyde, acétaldéhyde, trioxane et acide trifluoroacétique ; et/ou
dans laquelle la composition comprend en outre un composé supplémentaire choisi à partir d'au moins un parmi Z-HFO-1336mzz, E-HFO-1336mzz, HFO-1327 mz, HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye et HFO-1234yc.

5. Composition selon l'une quelconque des revendications 1 à 4, dans laquelle l'inhibiteur de terpène est présent dans la composition en une quantité d'au moins 0,001 % en poids (10 ppm), de préférence en une quantité d'au moins 0,01 % en poids (100 ppm).

6. Composition selon l'une quelconque des revendications 1 à 5, dans laquelle la quantité totale de composé supplémentaire est supérieure à 0 % en poids et inférieure à 1 % en poids, de préférence supérieure à 0,1 ppm et inférieure à 0,5 % en poids du poids total de la composition.

7. Composition selon l'une quelconque des revendications 1 à 6, dans laquelle la composition comprend en outre un inhibiteur supplémentaire choisi à partir de α-tocophérol, hydroxytoluène butylé, 4-méthoxyphénol et benzène-1,4-diol.

8. Composition selon l'une quelconque des revendications 1 à 7 dans laquelle l'inhibiteur de terpène comprend α-pinène.

9. Composition selon l'une quelconque des revendications 1 à 7 dans laquelle l'inhibiteur de terpène comprend du *β*-pinène.

10. Composition de réfrigérant comprenant la composition selon l'une quelconque des revendications 1 à 9 et un lubrifiant.

11. Processus de transfert de chaleur comprenant le transport d'une composition comprenant la composition selon l'une quelconque des revendications 1 à 9 d'une source de chaleur à un dissipateur thermique.

12. Procédé de production de chauffage ou de refroidissement dans un appareil de réfrigération, de climatisation ou de pompe à chaleur, ledit procédé comprenant l'introduction d'un réfrigérant dans ledit appareil présentant (a) un compresseur centrifuge ; (b) un compresseur centrifuge multi-étagé, ou (c) un échangeur de chaleur à plaque unique/passage unique ; dans lequel ledit réfrigérant est la composition de réfrigérant selon la revendication 10.

13. Système de transfert de chaleur comprenant la composition selon l'une quelconque des revendications 1 à 10.
